# EUROPEAN PATENT APPLICATION

(11) **EP 4 644 193 A1**
(43) Date of publication of application: **05.11.2025**
(21) Application number: 23911516.5
(22) Date of filing: 29.11.2023
(51) Int. Cl.: B60S 1/62

(54) **VEHICLE CLEANER**

(30) Priority: 28.12.2022 JP 2022212025
(71) Applicant: Koito Manufacturing Co., Ltd., Tokyo 141-0001 (JP)
(72) Inventor: KANAZAWA, Hironobu, Shizuoka-shi, Shizuoka 424-8764 (JP); SATO, Masaaki, Shizuoka-shi, Shizuoka 424-8764 (JP)
(74) Representative: Cabinet Beau de Loménie
(86) International application number: PCT/JP2023/042705
(87) International publication number: WO 2024/142735

(57) **Abstract**

A cleaner (1L) for cleaning a plurality of sensors mounted on a bumper of a vehicle with a cleaning medium includes a tubular cylinder (2) configured to allow the cleaning medium to be supplied from outside, a tubular piston (3) accommodated in the cylinder (2) and attached to the cylinder (2) so as to be extendable and contractible, and a single nozzle (4) configured to spray the cleaning medium supplied from the cylinder (2) to the piston (3). The single nozzle (4) has a first spraying port (44A) configured to spray the cleaning medium toward a first sensor (200L) disposed above the cylinder (2), and a second spraying port (44B) configured to spray the cleaning medium toward a second sensor (300L) disposed below the cylinder (2).

## Description

### TECHNICAL FIELD

The present disclosure relates to a vehicle cleaner.

### BACKGROUND ART

A headlamp cleaner for a vehicle is known in Patent Literature 1 and the like.

### CITATION LIST

### PATENT LITERATURE

Patent Literature 1: JP2016-187990A

### SUMMARY OF INVENTION

### TECHNICAL PROBLEM

In recent years, development of vehicles capable of being autonomously driven has been attempted. In order to realize autonomous driving, for example, it is required to maintain good sensitivity of various sensors such as LiDAR. There is a demand for a sensor cleaner for cleaning an in-vehicle sensor to remove foreign matters adhering to the in-vehicle sensor. As the sensor cleaner, for example, there is a sensor cleaner in which a nozzle that is attached to a tip end of the sensor cleaner and sprays a cleaning medium is configured as a pop-up type that can freely project and retract.

An object of the present disclosure is to provide a highly versatile vehicle cleaner capable of supporting a plurality of sensors mounted on a bumper of a vehicle.

### SOLUTION TO PROBLEM

In order to achieve the above object, a vehicle cleaner of the present disclosure is a cleaner for cleaning a plurality of sensors mounted on a bumper of a vehicle with a cleaning medium, the vehicle cleaner including:
a tubular cylinder configured to allow the cleaning medium to be supplied from outside;
a tubular piston accommodated in the cylinder and attached to the cylinder so as to be extendable and contractible; and
a single nozzle configured to spray the cleaning medium supplied from the cylinder to the piston, in which
the single nozzle has a first spraying port configured to spray the cleaning medium toward a first sensor disposed above the cylinder among the plurality of sensors, and a second spraying port configured to spray the cleaning medium toward a second sensor disposed below the cylinder among the plurality of sensors.

### ADVANTAGEOUS EFFECTS OF INVENTION

According to the present disclosure, it is possible to provide the highly versatile vehicle cleaner capable of supporting the plurality of sensors mounted on the bumper of the vehicle.

### BRIEF DESCRIPTION OF DRAWINGS

FIG. 1 is a front view of a vehicle equipped with a vehicle cleaner according to an embodiment of the present disclosure.
FIG. 2 is a front perspective view of the vehicle cleaner.
FIG. 3 is a back perspective view of the vehicle cleaner.
FIG. 4 is a longitudinal sectional view showing a state in which a piston of the vehicle cleaner pops up.

### DESCRIPTION OF EMBODIMENTS

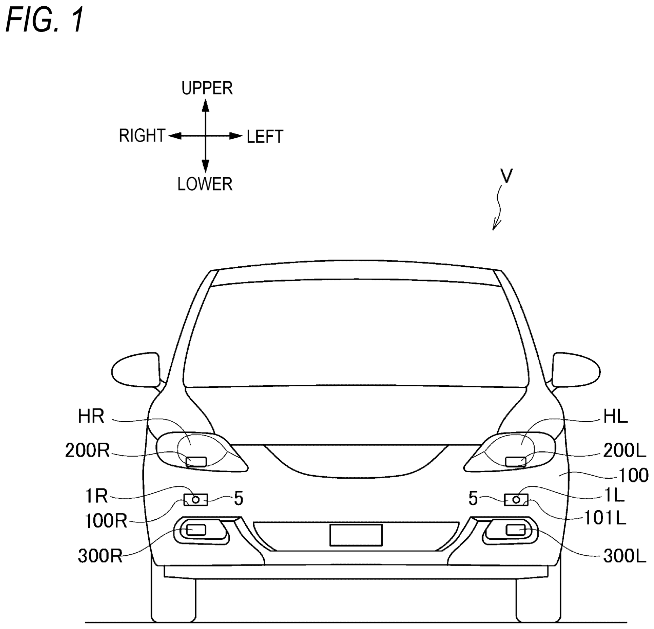

An example of an embodiment of the present disclosure will be described in detail below with reference to the accompanying drawings. In the drawings used in the following description, the scale is appropriately changed as necessary such that each member has a recognizable size. A "left-right direction", a "front-rear direction", and an "upper-lower direction" in the present example are relative directions set for convenience of description of a vehicle cleaner shown in FIG. 1 and the like.

FIG. 1 is a front view of a vehicle V equipped with vehicle cleaners (hereinafter referred to as cleaners) 1L and 1R according to the present embodiment.

As shown in FIG. 1, first sensors 200L and 200R, second sensors 300L and 300R, and the cleaners 1L and 1R are mounted on a front bumper 100 (an example of a bumper) of the vehicle V.

The first sensors 200L and 200R are respectively built in lamp chambers of left and right headlamps HL and HR mounted on an upper portion of the front bumper 100. That is, the left headlamp HL is a sensor built-in type lamp in which the first sensor 200L is built-in together with an illumination device. The right headlamp HR is a sensor built-in type lamp in which the first sensor 200R is built-in together with an illumination device. The first sensors 200L and 200R may be, for example, light detection and ranging (LiDAR) devices, cameras including imaging elements, millimeter-wave radars, or ultrasonic sensors. In the present example, the first sensors 200L and 200R are built in the lamp chambers of the headlamps HL and HR, but the present disclosure is not limited to this example, and the first sensors 200L and 200R may be disposed outside the headlamps HL and HR, for example, in the front bumper 100 on lower sides or sides of the headlamps HL and HR, respectively.

The second sensor 300L is disposed in the front bumper 100 below the left headlamp HL in which the first sensor 200L is built. The second sensor 300R is disposed in the front bumper 100 below the right headlamp HR in which the first sensor 200R is built. The second sensors 300L and 300R may be, for example, LiDAR devices, cameras, millimeter-wave radars, or ultrasonic sensors.

The cleaner 1L is mounted in an opening portion 101L formed in the front bumper 100. The opening portion 101L is formed between the second sensor 300L and the left headlamp HL in which the first sensor 200L is built. The cleaner 1L is supported by a bracket (not shown) in the opening portion 101L.

The cleaner 1R is mounted in an opening portion 101R formed in the front bumper 100. The opening portion 101R is formed between the second sensor 300R and the right headlamp HR in which the first sensor 200R is built. The cleaner 1R is supported by a bracket (not shown) in the opening portion 101R.

Since the left and right cleaners 1L and 1R have the same configuration, the left cleaner 1L will be representatively described below.

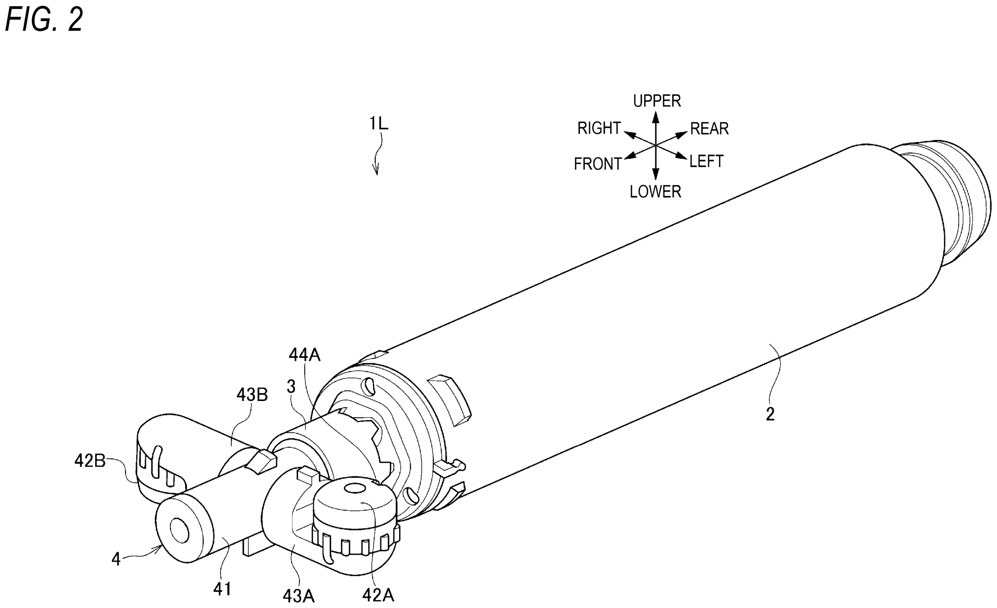

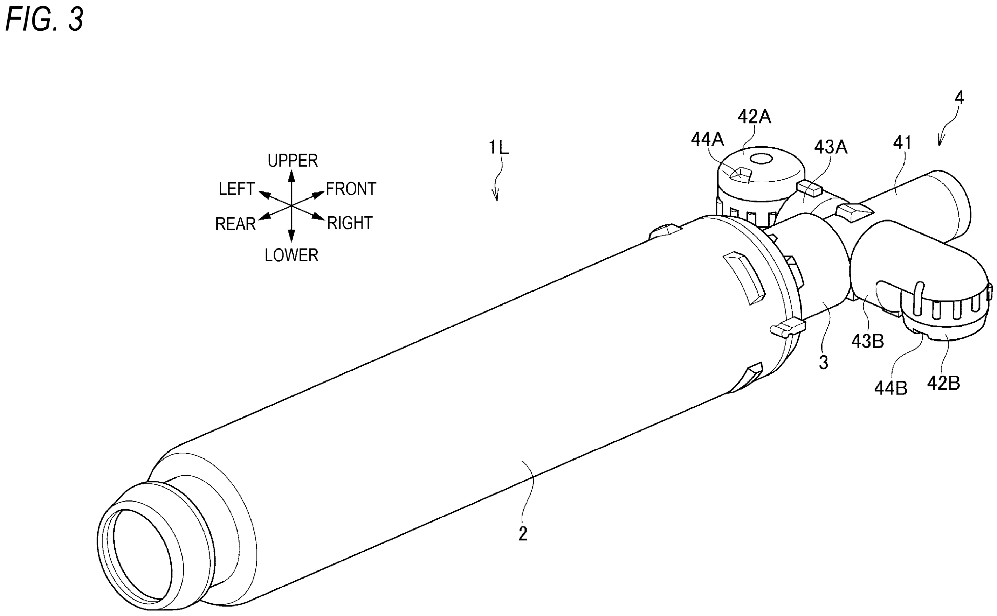

FIG. 2 is a front perspective view of the cleaner 1L shown in FIG. 1. FIG. 3 is a back perspective view of the cleaner 1L.

The cleaner 1L is a cleaner for cleaning the first sensor 200L and the second sensor 300L by spraying a cleaning liquid to each of the first sensor 200L and the second sensor 300L mounted on the vehicle V. Specifically, the cleaner 1L is used to remove dirt and snow adhering to a front cover that is a surface to be cleaned of the first sensor 200L and a front cover that is a surface to be cleaned of the second sensor 300L, or to prevent dirt and snow from adhering to these front covers. Depending on the type of the first sensor 200L and the second sensor 300L, the front cover does not need to be transparent to visible light.

As shown in FIGS. 2 and 3, the cleaner 1L includes a cylinder 2, a piston 3, and a nozzle 4.

The cylinder 2 is mounted in the opening portion 101L of the front bumper 100. The cylinder 2 is formed in a substantially cylindrical shape extending in the front-rear direction, and a coupling pipe (not shown) is coupled to a rear end portion of the cylinder 2. The coupling pipe is coupled to a storage tank that stores the cleaning liquid and is disposed inside a vehicle body. The cleaning liquid sent from the storage tank flows into the cylinder 2 through the coupling pipe.

The piston 3 is formed in a substantially cylindrical shape extending in the front-rear direction, and is slidably supported inside the cylinder 2. That is, the piston 3 is supported so as to be movable in an axial direction (the front-rear direction) of the cylinder 2. When the cleaner 1L does not perform cleaning, a portion of the piston 3 excluding a front end portion is inserted into the cylinder 2. In an accommodated position, the front end portion of the piston 3 protrudes forward from the cylinder 2. The cleaning liquid flowing into the cylinder 2 flows into the piston 3.

The nozzle 4 includes a base portion 41, a pair of left and right spraying portions 42A and 42B, and a pair of left and right spraying portion holders 43A and 43B that support the spraying portions 42A and 42B respectively.

The base portion 41 is a substantially cylindrical body provided continuously to the front end portion of the piston 3. The spraying portion holders 43A and 43B protrude to the left and right from a side surface of the base portion 41. Internal spaces of the pair of spraying portion holders 43A and 43B communicate with an internal space of the base portion 41. A valve (not shown) is disposed in the internal space of the base portion 41. The cleaning liquid flowing into the piston 3 is supplied to the internal space of the base portion 41, and the valve is opened by a pressure of the cleaning liquid, so that the cleaning liquid flows into the spraying portion holders 43A and 43B.

The spraying portions 42A and 42B are supported by outer end portions of the spraying portion holders 43A and 43B, respectively. Spraying ports 44A and 44B for spraying the cleaning liquid are formed in the spraying portions 42A and 42B, respectively. When the cleaning liquid flowing into the spraying portion holders 43A and 43B further flows into the internal spaces of the spraying portions 42A and 42B, the cleaning liquid is sprayed from the spraying ports 44A and 44B, respectively.

The spraying portion holder 43A on the left side is attached to the base portion 41 so as to be rotatable by 360 degrees about the left-right direction. The spraying portion 42A on the left side is supported by the spraying portion holder 43A so as to be rotatable by 360 degrees about an attachment direction to the spraying portion holder 43A. By rotating the spraying portion 42A and the spraying portion holder 43A, respectively, the spraying port 44A can be directed in a desired direction. In the present example, the spraying portion 42A is disposed at a position where the cleaning liquid can be sprayed rearward from the spraying port 44A.

Similarly, the spraying portion holder 43B on the right side is attached to the base portion 41 so as to be rotatable by 360 degrees about the left-right direction. The spraying portion 42B on the right side is supported by the spraying portion holder 43B so as to be rotatable by 360 degrees about an attachment direction to the spraying portion holder 43B. By rotating the spraying portion 42B and the spraying portion holder 43B, respectively, the spraying port 44B can be directed in a desired direction. In the present example, the spraying portion 42B is disposed at a position where the cleaning liquid can be sprayed rearward from the spraying port 44B.

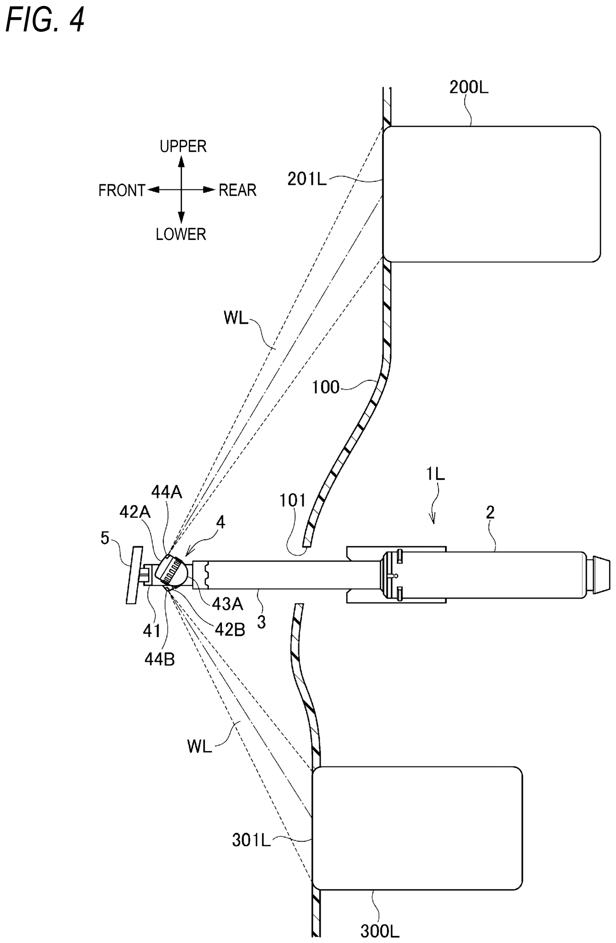

FIG. 4 is a longitudinal sectional view showing a state in which the piston 3 of the cleaner 1L pops up.

As shown in FIGS. 1 and 4, a nozzle cover 5 is provided at a tip end of the base portion 41 of the nozzle 4. The nozzle cover 5 can close the opening portion 101L of the front bumper 100 in a state in which the piston 3 does not pop up. That is, the nozzle cover 5 is configured to close the opening portion 101L in a state in which the piston 3 is drawn into the cylinder 2. The nozzle cover 5 is disposed at a position where the nozzle cover 5 is flush with the front bumper 100 in a non-pop-up state of the piston 3.

As shown in FIG. 4, the spraying portion 42A on the left side of the left and right spraying portions 42A and 42B of the nozzle 4 sprays a cleaning liquid WL from the spraying port 44A toward the front cover 201L of the first sensor 200L on an upper side in a state in which the piston 3 protrudes from the opening portion 101L of the front bumper 100. That is, the spraying portion 42A is positioned at a position where the cleaning liquid WL can be sprayed rearward and obliquely upward from the spraying port 44A.

The spraying portion 42B on the right side sprays the cleaning liquid WL from the spraying port 44B toward the front cover 301L of the second sensor 300L on a lower side in a state in which the piston 3 protrudes from the opening portion 101L of the front bumper 100. That is, the spraying portion 42B is positioned at a position where the cleaning liquid WL can be sprayed rearward and obliquely downward from the spraying port 44B.

As described above, by rotating the left and right spraying portions 42A and 42B and the spraying portion holders 43A and 43B on which the spraying portions 42A and 42B are mounted such that the spraying ports 44A and 44B face desired directions, respectively, the cleaning liquid WL can be sprayed from the single nozzle 4 to the first sensor 200L and the second sensor 300L disposed at different positions.

As described above, the cleaners 1L and 1R according to the present embodiment are cleaners for cleaning the first sensors 200L and 200R and the second sensors 300L and 300R (an example of a plurality of sensors) mounted on the front bumper 100 of the vehicle V with the cleaning liquid WL (an example of a cleaning medium). Each of the cleaners 1L and 1R includes the tubular cylinder 2 to which the cleaning liquid WL is supplied from the outside, the tubular piston 3 accommodated in the cylinder 2 and attached to the cylinder 2 so as to be extendable and contractible, and the single nozzle 4 that sprays the cleaning liquid WL supplied from the cylinder 2 to the piston 3. The single nozzle 4 has the spraying port 44A (an example of a first spraying port) that sprays the cleaning liquid WL toward each of the first sensors 200L and 200R disposed in an upper portion of the cylinder 2, and the spraying port 44B (an example of a second spraying port) that sprays the cleaning liquid WL toward each of the second sensors 300L and 300R disposed in a lower portion of the cylinder 2. According to this configuration, it is possible to provide the high versatility vehicle cleaners 1L and 1R capable of supporting a plurality of sensors mounted on the front bumper 100.

In the present example, in a state in which the cleaner 1L pops up, a spraying range of the cleaning liquid WL sprayed from the spraying port 44A of the spraying portion 42A toward the first sensor 200L located diagonally upward and rearward is substantially the same as a spraying range of the cleaning liquid WL sprayed from the spraying port 44B of the spraying portion 42B toward the second sensor 300L located diagonally downward and rearward, but the present disclosure is not limited to this example. The spraying port 44A and the spraying port 44B may be set to be able to spray the cleaning liquid WL in different ranges in a vertical direction in accordance with a target to be cleaned. For example, when the surface to be cleaned of the first sensor 200L provided above the cleaner 1L is larger than the surface to be cleaned of the second sensor 300L provided below the cleaner 1L, the spraying range of the cleaning liquid WL sprayed from the spraying port 44A toward the first sensor 200L is preferably set to be larger than the spraying range of the cleaning liquid WL sprayed from the spraying port 44B toward the second sensor 300L. Accordingly, the single nozzle 4 can maintain clean states of the plurality of sensors having different target ranges to be cleaned.

In the present embodiment, the first sensors 200L and 200R and the second sensors 300L and 300R are disposed along the upper-lower direction with the cleaners 1L and 1R interposed therebetween, but the present disclosure is not limited. A plurality of sensors may be disposed along a direction other than the upper-lower direction, for example, the left-right direction or the front-rear direction, and the cleaning liquid may be sprayed toward each sensor from a single cleaner disposed between the plurality of sensors.

The application of the vehicle cleaners 1L and 1R according to the present embodiment is not limited to the cleaning of the in-vehicle sensors (the first sensors 200L and 200R and the second sensors 300L and 300R). For example, the cleaners 1L and 1R can be widely applied as a cleaner that cleans various part to be cleaned provided in a vehicle, such as a vehicle lamp such as a headlamp, a vehicle body, a window, and a mirror. Further, the cleaners 1L and 1R can be attached to the front bumper 100, but can be attached to various part constituting a part of the vehicle such as a vehicle body or a headlamp other than the front bumper 100.

In the above embodiment, the cleaning liquid is sprayed from the cleaners 1L and 1R toward each sensor, but a gas such as air may be sprayed instead of the cleaning liquid or together with the cleaning liquid.

The present disclosure is not limited to the embodiment described above, and may be appropriately modified, improved, or the like. In addition, materials, shapes, dimensions, numerical values, forms, numbers, arrangement places, and the like of components in the embodiment described above are freely selected and are not limited as long as the present disclosure can be implemented.

The present application is based on a Japanese patent application No. 2022-212025 filed on December 28, 2022, the contents of which are incorporated herein by reference.

## Claims

1. A vehicle cleaner for cleaning a plurality of sensors mounted on a bumper of a vehicle with a cleaning medium, the vehicle cleaner comprising:
a tubular cylinder configured to allow the cleaning medium to be supplied from outside;
a tubular piston accommodated in the cylinder and attached to the cylinder so as to be extendable and contractible; and
a single nozzle configured to spray the cleaning medium supplied from the cylinder to the piston, wherein
the single nozzle includes a first spraying port configured to spray the cleaning medium toward a first sensor disposed above the cylinder among the plurality of sensors, and a second spraying port configured to spray the cleaning medium toward a second sensor disposed below the cylinder among the plurality of sensors.
